# FASCICULE DE BREVET EUROPEEN

(11) **EP 2 004 560 B1**
(45) Date de publication et mention de la délivrance du brevet: **15.06.2011**
(21) Numéro de dépôt: 07731804.6
(22) Date de dépôt: 23.03.2007
(51) Int. Cl.: C03B 37/00, D01D 5/08, D01D 10/02

(54) **PROCEDE ET DISPOSITIF DE FABRICATION D'UN FIL COMPOSITE FORME PAR L'ASSOCIATION DE FILAMENTS CONTINUS DE VERRE ET DE FILAMENTS CONTINUS THERMOPLASTIQUES**
VERFAHREN UND VORRICHTUNG ZUR HERSTELLUNG EINES VERBUNDSTRANGS
PROCESS AND DEVICE FOR MANUFACTURING A COMPOSITE STRAND

(30) Priorité: 30.03.2006 FR 0651115
(43) Date de publication de la demande: 24.12.2008
(73) Titulaire: OCV Intellectual Capital, LLC, Toledo, OH 43659 (US)
(72) Inventeur: LOUBINOUX, Dominique, F-73290 La Motte Servolex (FR); GAS, Bruno, F-73000 Chambery (FR)
(74) Mandataire: Intès, Didier Gérard André
(86) Numéro de dépôt international: PCT/FR2007/050991
(87) Numéro de publication internationale: WO 2007/113431

(56) Documents cités:
- EP-A1- 0 599 695
- EP-A1- 0 616 055

## Description

L'invention concerne un procédé et un dispositif de fabrication d'un fil composite formé par l'association d'une multiplicité de filaments continus de verre et de filaments continus de matière organique thermoplastique à fort retrait.

La fabrication de fils composites est divulguée notamment dans EP-A-0 367 661 qui décrit un procédé mettant en oeuvre une première installation comprenant une filière contenant du verre à l'état fondu à partir de laquelle sont étirés des filaments continus de verre, et une deuxième installation comprenant une tête de filage, alimentée sous pression par une matière organique thermoplastique qui délivre des filaments continus.

Les deux types de filaments sont assemblés en au moins un fil composite et lors de l'assemblage les filaments peuvent se présenter sous la forme de nappes, ou de nappe et de fils. Dans le fil composite, les filaments ou le fil de verre sont entourés de filaments thermoplastiques qui protègent le verre des frottements sur les surfaces solides avec lesquelles le fil est en contact.

Si l'incorporation de filaments thermoplastiques permet d'améliorer la résistance du fil à l'abrasion, elle introduit aussi des tensions dans le fil dues à un phénomène de retrait desdits filaments, ce qui entraîne une ondulation des filaments de verre. La présence d'ondulation est particulièrement visible lorsque le fil composite est enroulé sous la forme d'une bobine car celle-ci est déformée sur toute sa périphérie.

Le phénomène de retrait présente plusieurs inconvénients : il impose de recourir à des manchettes épaisses pour la réalisation des bobines afin qu'elles puissent résister au frettage exercé par le fil composite et perturbe le dévidage du fil à partir de la bobine du fait que celle-ci n'a pas les caractéristiques géométriques idéales qui sont requises pour l'application visée. Par ailleurs, un tel fil n'est pas avantageux pour réaliser un tissu utilisable en tant que matériau de renfort de pièces planes de grande dimension car du fait des ondulations, les filaments ne sont pas parfaitement alignés dans le composite final. La capacité de renforcement des fils dans une direction donnée s'en trouve diminuée.

Pour remédier au problème du retrait des filaments thermoplastiques, différentes solutions ont été proposées.

Dans EP-A-0 505 275, on propose un procédé pour la fabrication d'un fil composite semblable à celui décrit précédemment dans EP-A-0 367 661 qui prévoit de former les filaments thermoplastiques au moyen d'une tête de filage habituellement utilisée dans le domaine de l'industrie des fibres synthétiques. De cette manière, il est possible d'obtenir un fil composite formé d'un ou plusieurs fils de verre environnés de filaments organiques, qui est indépendant de la configuration de la tête de filage utilisée pour l'extrusion des filaments organiques.

Dans EP-A-0 599 695, il est proposé de mêler les filaments thermoplastiques aux filaments de verre avec une vitesse lors du co-mêlage qui est supérieure à la vitesse d'étirage des filaments de verre. L'écart de vitesse est déterminé de manière à ce que le phénomène de retrait compense l'excès de longueur initial des filaments thermoplastiques par rapport-aux filaments de verre.

Dans un mode de réalisation, les filaments thermoplastiques passent sur un étireur à vitesses variable, du type à tambours, qui accentue l'excès de longueur, ce qui permet d'obtenir un fil composite dont les filaments de verre sont linéaires et les filaments thermoplastiques sont ondulés.

Dans EP-A-0 616 055, il est encore proposé un procédé de production d'un fil composite verre/thermoplastique qui consiste à mêler une nappe de filaments thermoplastiques à un faisceau ou une nappe de filaments de verre, les filaments thermoplastiques étant, en amont du point de convergence, chauffés à une température supérieure à leur température de relaxation, étirés puis refroidis. Le fil composite obtenu est sans ondulation et stable dans le temps.

La fabrication directe de stratifils (« rovings » en anglais), sans passage par une étape intermédiaire de dévidage du gâteau et de bobinage du fil, est opérée en continu par étirage du fil composite sous la filière à une vitesse compatible avec l'étirage des filaments de verre. A cette vitesse déjà importante (de l'ordre de quelques mètres à une dizaine de mètres par seconde) est associée une vitesse d'étirage des filaments thermoplastiques en amont du point de convergence qui encore plus élevée.

La production d'un fil composite sans ondulation dans de telles conditions passe par une synchronisation précise des vitesses relatives des éléments en rotation de l'étireur et du maintien de l'écart initial entre les vitesses d'étirage des filaments de verre et des filaments thermoplastiques.

Ces conditions sont limitées aux matières thermoplastiques qui subissent un retrait limité. Dès lors que le retrait est plus important, l'étireur devient inopérant du fait que sa vitesse ne peut plus être augmentée de manière à accroître suffisamment la longueur des filaments thermoplastiques pour que le fil composite ne présente pas d'ondulation.

La présente invention a pour but de proposer un procédé permettant la fabrication d'un fil composite comprenant des filaments continus de matière thermoplastique à fort retrait et des filaments continus de verre co-mêlés qui ne présente aucune ondulation lors de sa fabrication et qui reste stable dans le temps.

Ce but est atteint par un procédé de fabrication selon la revendication 1, dans lequel un fil composite formé par co-mêlage de filaments continus de verre étirés mécaniquement à partir des orifices d'une filière remplie de verre fondu et de filaments continus de matière organique thermoplastique issus d'une tête de filage, lesdits filaments thermoplastiques étant mêlés sous forme d'une nappe à un faisceau ou une nappe des filaments de verre, dans lequel, avant leur co-mêlage avec les filaments de verre, les filaments thermoplastiques sont étirés, chauffés puis projetés sur un support en mouvement avec une vitesse lors de leur projection sur le support qui est supérieure à la vitesse de défilement dudit support. L'effet combiné de l'étirement et de la projection des filaments thermoplastiques chauffés leur confère un niveau de frisure important qui permet par la suite de compenser le retrait de la matière thermoplastique dans le fil composite.

De manière avantageuse, le chauffage et la projection des filaments thermoplastiques sont effectués simultanément.

Selon un premier mode de réalisation de l'invention, les filaments thermoplastiques sont guidés sous la forme d'une nappe jusqu'aux filaments de verre, également sous la forme d'une nappe, et sont associés à ces derniers à des vitesses identiques entre le rouleau enducteur et le point de rassemblement de l'ensemble des filaments en un fil composite.

Selon un autre mode de réalisation, les filaments thermoplastiques sont projetés sur les filaments de verre déposés sur le support en mouvement, dans le sens de défilement dudit support. On obtient ainsi une nappe formée par l'enchevêtrement des filaments thermoplastiques frisés avec les filaments linéaires de verre, cette nappe étant par la suite rassemblée pour constituer le fil composite.

Le procédé selon l'invention permet d'obtenir un fil composite sans aucune ondulation : les filaments de verre qui entrent dans la constitution du fil composite sont linéaires immédiatement après leur rassemblement avec les filaments thermoplastiques, et ils conservent leur linéarité après la collecte sous forme d'enroulement. Au final les filaments thermoplastiques dans le fil composite peuvent être linéaires ou ondulés selon le niveau de frisure qui leur a été conféré au départ.

Grâce à l'invention, il est possible de former des bobines dans les conditions habituelles de production de fils de verre, notamment en utilisant des manchettes d'épaisseur ordinaire étant donné l'absence de frettage du fil composite, ces manchettes pouvant être retirées pour obtenir des pelotes et réutilisées si nécessaire. Ceci présente l'avantage de pouvoir extraire le fil composite selon le principe de la déroulée (par l'extérieur) ou de la défilée (par l'intérieur).

Outre le fait qu'il permet d'obtenir un fil composite sans ondulation avec une matière thermoplastique à fort retrait, le procédé selon l'invention assure une répartition homogène et un co-mêlage important des filaments au sein du fil composite.

L'invention propose également un dispositif selon la revendication 6 permettant la mise en oeuvre de ce procédé.

Selon l'invention, pour permettre la fabrication d'un fil composite formé de filaments continus de verre et de filaments continus thermoplastiques à fort retrait, ce dispositif comprend d'une part une installation comprenant au moins une filière alimentée en verre fondu, dont la face inférieure comporte une multitude d'orifices, cette filière étant associée à un dispositif enducteur, et d'autre part une installation comprenant au moins une tête de filage alimentée sous pression en matière organique thermoplastique fondue, dont la face inférieure est munie d'une multiplicité d'orifices, cette tête de filage étant associée à étireur du type à tambours, à un dispositif de projection des filaments thermoplastiques doté de moyens de chauffage, à un support en mouvement du type tambour, et à un moyen permettant de mêler les filaments thermoplastiques aux filaments de verre, enfin des moyens communs aux deux installations permettant l'assemblage et le bobinage du fil composite.

L'étireur à tambours possède au moins deux rouleaux fonctionnant à des vitesses variables, de préférence assurant une vitesse linéaire croissante des filaments thermoplastiques. Lorsque l'étireur comprend plus de deux rouleaux, ces derniers fonctionnent avantageusement par paires. L'étireur peut être doté de moyens de chauffage, par exemple électrique ou par infra-rouge, de préférence placés dans le premier tambour rencontré par les filaments thermoplastiques dans le but de les préchauffer et de favoriser ainsi leur étirement.

De façon préférée, le moyen permettant de projeter les filaments thermoplastiques sur le support en mouvement est un dispositif mettant en oeuvre les propriétés des fluides qui peuvent être des liquides ou des gaz tels que de l'air, pulsé ou comprimé. Avantageusement, il s'agit d'un système Venturi dont le rôle est uniquement de projeter les filaments thermoplastiques en leur donnant une orientation et une répartition spatiale adéquate, sans leur conférer de vitesse supplémentaire.

Selon un mode préféré de l'invention, les moyens de chauffage, notamment électriques, sont associés au dispositif assurant la projection des filaments thermoplastiques. De cette façon, le chauffage des filaments thermoplastiques à une température proche de leur température de ramollissement est effectué de manière homogène et rapide, ce qui permet d'obtenir un état de frisure satisfaisant lors de la projection sur le support en mouvement.

Le support en mouvement peut être constitué d'un tambour dont la surface comporte des perforations, comprenant un élément de séparation du volume interne en au moins deux compartiments, l'un raccordé à des moyens permettant de le maintenir en dépression, l'autre associé à des moyens permettant de le mettre en surpression. La dimension et la disposition des compartiments sont choisis de manière à maintenir les filaments thermoplastiques dans leur état de frisure initial, sous la forme d'une nappe à la surface du tambour situé au dessus du premier compartiment, et à obtenir la séparation de la nappe lorsqu'elle passe au dessus du deuxième compartiment.

Le moyen permettant de mêler les deux types de filaments peut être constitué par un système Venturi comme décrit précédemment qui permet de projeter les filaments thermoplastiques dans un nappe ou un faisceau de filaments de verre. De préférence, ce système projette les filaments thermoplastiques à une vitesse identique à la vitesse d'étirage des filaments de verre.

Le moyen assurant le co-mêlage des filaments peut également être constitué par le support en mouvement du type tambour. Dans ce cas, le tambour sert de support à la nappe de filaments de verre, laquelle s'enroule autour de lui, et les filaments thermoplastiques frisés sous la forme de nappe se mêlent aux filaments de verre sur une génératrice du tambour.

Les dispositifs décrits précédemment permettent la réalisation de fils composites, à partir de filaments thermoplastiques à fort retrait préalablement frisés et de filaments de verre, qui ne présentent aucune déformation ultérieure, c'est-à-dire qui restent stables dans le temps.

De tels dispositifs sont applicables à tout type de verre connu, par exemple le verre E, R, S, AR ou C, le verre E étant préféré.

De la même manière, il est possible d'utiliser toute matière thermoplastique susceptible de présenter un fort retrait, par exemple un polymère appartenant au groupe des polyuréthanes, des polyesters tels que le polyéthylènetéréphtalate (PET) et le polybutylènetéréphtalate (PBT), et des polyamides tels que le polyamide-6, le polyamide-6,6, le polyamide-11 et le polyamide-12.

D'autres détails et caractéristiques avantageuses de l'invention apparaîtront à la lecture de la description des exemples de dispositifs de mise en oeuvre de l'invention décrits en référence aux figures annexées qui représentent :
- figure 1 : une représentation schématique d'une installation selon l'invention,
- figure 2 : une représentation schématique d'un second mode de réalisation de l'invention.

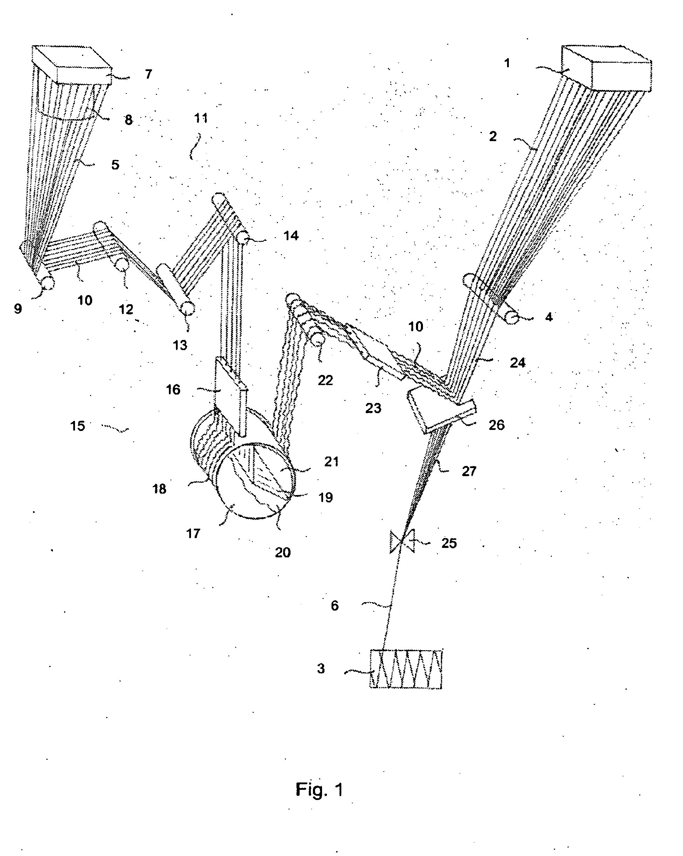

Sur la figure 1 est représentée une vue schématique d'une installation complète selon l'invention. Elle comprend une filière 1 alimentée en verre fondu soit par une trémie contenant du verre froid, par exemple sous forme de billes qui tombent par la simple gravité, soit depuis l'avant-corps d'un four qui achemine directement le verre jusqu'à son sommet,.

Quel que soit le type d'alimentation, la filière 1 est habituellement en alliage de platine et de rhodium et elle est chauffée par effet Joule de manière à refondre le verre ou le maintenir à une température élevée. De la filière 1 s'écoule une multitude de filets de verre fondu qui sont étirés sous la forme d'un faisceau 2 de filaments par un dispositif, non représenté, permettant également de former la bobine 3. Sur le trajet du faisceau 2 est disposé un rouleau enducteur 4, par exemple en graphite, qui dépose sur les filaments de verre un ensimage destiné à prévenir ou limiter les frottements des filaments sur les organes avec lesquels ils entrent en contact. L'ensimage peut être aqueux ou anhydre (c'est-à-dire comprendre moins de 5 % en masse d'eau) et contenir des composés -ou des dérivés de ces composés- qui entrent dans la constitution des filaments thermoplastiques 5 venant s'associer aux filaments de verre pour former le fil composite 6.

Sur la figure 1 est également représentée schématiquement une tête de filage 7 d'où sont extrudés les filaments thermoplastiques 5. La tête de filage 7 est alimentée par un matériau thermoplastique fondu, à fort retrait, par exemple issu d'une extrudeuse, non représentée, alimentée par des granulés, qui s'écoule sous pression par de multiples orifices placés sous la tête de filage 7, pour former les filaments 5 par étirage et refroidissement. Le refroidissement des filaments est effectué par convection forcée, au moyen d'un dispositif de conditionnement 8 de forme adaptée à la tête de filage 7 et qui génère un écoulement d'air laminaire perpendiculaire aux filaments. L'air de refroidissement a un débit, une température et une hygrométrie qui sont maintenus constants. Les filaments 5 passent ensuite sur un rouleau 9 qui permet de les rassembler sous la forme d'une nappe 10, d'une part, et de dévier leur trajectoire, d'autre part.

Après passage sur le rouleau 9, la nappe 10 de filaments thermoplastiques passe sur un étireur 11 formé par exemple des rouleaux 12, 13 qui peuvent tourner à la même vitesse ou avoir des vitesses différentes de sorte que l'accélération se fasse dans le sens du défilement des filaments thermoplastiques. L'étireur 11 a pour fonction d'étirer les filaments 5 et de conférer une vitesse déterminée à la nappe 10. II est possible de faire varier la vitesse de rotation des rouleaux 12 et 13 de façon à ajuster précisément la vitesse de projection des filaments thermoplastiques sur le tambour 17. Aux rouleaux 12, 13, il peut être associé, le cas échéant, un système de chauffage, par exemple électrique, qui permet d'assurer un préchauffage rapide et homogène des filaments thermoplastiques par contact avec la surface des rouleaux. L'étireur 11 peut être formé d'un nombre plus élevé de rouleaux, de préférence fonctionnant par paire, par exemple quatre ou six rouleaux.

La nappe 10 de filaments thermoplastiques, éventuellement préchauffés, est ensuite dirigée vers le rouleau de déviation 14, lequel peut être chauffé et éventuellement être moteur, puis elle passe dans un dispositif 15 de frisure formé par exemple d'un système Venturi 16 et d'un tambour 17.

Le système Venturi 16 permet de maintenir les filaments thermoplastiques individualisés et de les projeter en une nappe régulière et de dimension appropriée sur le tambour 17. Le système Venturi 16 fonctionne avec un apport d'air comprimé et ne communique vitesse supplémentaire à la nappe 10. Ce système est associé à un dispositif de chauffage (non représenté), par exemple au moyen d'un fluide tel que de l'air chaud ou de la vapeur, et a pour rôle de porter les filaments thermoplastiques à une température proche de la température de ramollissement de la matière thermoplastique afin d'améliorer leur aptitude à la frisure.

A la sortie du système Venturi 16, la nappe 10 de filaments thermoplastiques est projetée sur le tambour 17. La vitesse de rotation du tambour 17 est inférieure à la vitesse de la nappe 10 lors de sa projection si bien que les filaments frisent dès qu'ils entrent en contact avec la surface dudit tambour.

Le tambour 17 est pourvu d'une gorge centrale 18, de largeur légèrement inférieure à celle du tambour, qui est percée de multiples orifices (non représentés). Il comprend aussi un élément 19, coaxial, non mobile par rapport au tambour, qui sert à séparer l'intérieur du tambour en deux compartiments 20, 21. Le compartiment 20 est relié à un dispositif, non représenté, qui permet de le mettre en dépression, par exemple une pompe aspirante, et le compartiment 21 est relié à un dispositif, non représenté, permettant de le mettre en surpression, par exemple un dispositif d'injection d'air.

Après sa projection sur le tambour 17, la nappe 10 de filaments frisés est maintenue dans la gorge 18 au niveau du compartiment 20 en dépression et elle est refroidie, par simple contact avec la surface perforée ou par l'intermédiaire d'un fluide, par exemple de l'eau ou une composition d'apprêt pulvérisée sur les filaments. Ensuite, la nappe 10 se sépare de la surface du tambour 17 au niveau du compartiment 21 sous l'effet de l'air sous pression passant au travers des perforations.

La nappe 10 passe ensuite sur un rouleau de déviation 22, puis dans un dispositif Venturi 23 qui maintient les filaments thermoplastiques frisés sous forme individualisée jusqu'à ce qu'ils soient mêlés aux filaments de verre de la nappe 24.

La jonction de la nappe 10 de filaments thermoplastiques et de la nappe 24 de filaments de verre a lieu entre le rouleau enducteur 4 et l'élément 25 servant à rassembler les filaments en fil composite. Lors du co-mêlage des filaments, les filaments thermoplastiques arrivent avec une vitesse égale à celle des filaments de verre.

Un déflecteur 26 muni d'une encoche assure le maintien, en particulier sur les bords, de l'ensemble des filaments et permet d'atténuer la perturbation subie par la nappe 24 de filaments de verre au moment de la projection de la nappe 10 de filaments thermoplastiques frisés.

La nappe 27 de filaments thermoplastiques frisés et de filaments de verre entremêlés passe ensuite sur le dispositif 25 qui permet l'assemblage des filaments en un fil composite 6, lequel est immédiatement enroulé sous la forme d'une bobine 3 grâce à un dispositif d'étirage, non représenté, qui fonctionne à une vitesse linéaire donné maintenue constante pour garantir la masse linéique désirée.

Cette vitesse linéaire qui permet l'étirage des filaments de verre est en général égale à celle que communique le tambour 17 à la nappe 10 de filaments thermoplastiques frisés. Néanmoins, il est possible de mêler les filaments thermoplastiques aux filaments de verre avec une vitesse lors de leur projection qui peut être inférieure afin de conférer une tension supplémentaire aux filaments thermoplastiques pour améliorer leur maintien en nappe jusqu'au point de co-mêlage avec les filaments de verre. Dans ces conditions, l'écart entre la vitesse de projection des filaments thermoplastiques et la vitesse d'étirage des filaments de verre n'excède pas 10 %.

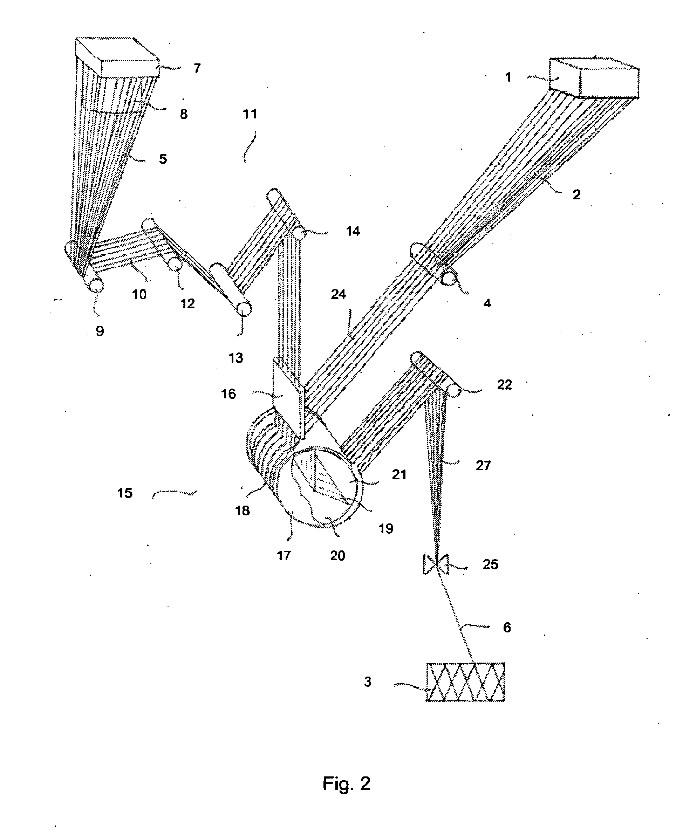

La figure 2 représente une installation selon un deuxième mode de réalisation de l'invention. Dans cette figure, -les dispositifs et moyens en commun portent les mêmes numéros que sur la figure 1.

Le faisceau 2 de filaments de verre s'écoulant de la filière est étiré par un dispositif non représenté qui forme la bobine 3. Le faisceau 2 passe sur le rouleau enducteur 4 qui dépose un ensimage sur les filaments de verre et la nappe 24 formée est enroulée sur le tambour 17.

Les filaments thermoplastiques 5 extrudés à partir de la tête de filage 7, refroidis par le dispositif de conditionnement 8 sont rassemblés en une nappe 10 au niveau du rouleau 9. La nappe 10 passe ensuite sur l'étireur 11 à rouleaux 12, 13 et est étirée dans les mêmes conditions qu'à la figure 1. A la sortie du rouleau 13, la nappe 10 est dirigée vers le rouleau 14, éventuellement chauffé et/ou moteur, et dans le dispositif de frisure 15 formé du système Venturi 16 et du tambour 17.

Dans le système Venturi, les filaments thermoplastiques de la nappe 10 sont maintenus à l'état individualisé et sont chauffés à une température voisine de la température de ramollissement pour contribuer à obtenir un niveau de frisure élevé.

La nappe 10 chauffée est projetée sur le tambour 17 qui tourne à une vitesse inférieure à la vitesse de projection des filaments ce qui les fait friser. La jonction de la nappe 10 de filaments thermoplastiques frisés et de la nappe 24 de filaments de verre se fait sur une génératrice du tambour 17. La projection de la nappe 10 a lieu alors que les filaments de la nappe 24 sont contenus dans la gorge 18 du tambour 17 ; cette manière de procéder évite de perturber la nappe des filaments de verre et permet ainsi de réduire le risque de casse desdits filaments.

Immédiatement après leur jonction avec la nappe 24, les filaments thermoplastiques frisés s'entremêlent avec les filaments de verre et sont plaqués au fond de la gorge 18 au niveau du compartiment 20 en dépression. Lorsque la nappe de filaments thermoplastiques et de filaments de verre enroulée sur le tambour 17 arrive au niveau du compartiment 21, elle se détache de la surface lorsqu'elle arrive au niveau du compartiment 21 sous l'action de l'air sous pression sous l'effet de la pression d'air venant de l'intérieur dudit compartiment.

La nappe 27 passe sur le rouleau 22 et sur le dispositif 25 de rassemblement des filaments en un fil composite 6 lequel est enroulé sous la forme de la bobine 3. Un deuxième dispositif 25 peut être disposé entre la sortie du tambour 17 et le rouleau 22 pour contribuer à un meilleur rassemblement du fil composite.

Les bobines obtenues à l'aide du procédé selon l'invention sont constituées d'un fil composite dont les filaments de verre sont linéaires et les filaments thermoplastiques sont frisés (ou ondulés) de manière permanente et stable dans le temps. Le niveau de frisure ou d'ondulation des filaments thermoplastiques dans le fil composite dépend de l'importance de la frisure qui leur a été donnée lors de la projection sur le support en mouvement.

En outre, la répartition des filaments de verre et des filaments thermoplastiques au sein du fil composite est homogène traduisant un bon co-mêlage des filaments.

Il est possible d'apporter quelques modifications au procédé et dispositif qui viennent d'être décrits. Tout d'abord, il est possible d'utiliser un ensimage constitué de plusieurs solutions, aqueuses ou non, comprenant des composés susceptibles de co-polymériser dans un temps relativement court lorsqu'ils sont mis en contact les uns avec les autres. Dans ce cas, le dispositif enducteur comprend des rouleaux séparés, chacun d'eux déposant sur les filaments de verre une des solutions d'ensimage. Il est également possible de prévoir un dispositif de séchage permettant d'éliminer l'eau des filaments de verre, ou tout au moins d'en réduire notablement la teneur, avant le bobinage.

Il est également possible d'associer l'invention à la réalisation de fils composites complexes, c'est-à-dire de fils composites comportant des matières organiques thermoplastiques qui présentent des retraits différents. Pour cela, il est possible de former des filaments de nature différente, par exemple à partir d'une ou plusieurs têtes de filage, et de les projeter, sous forme individualisée ou après les avoir assemblés, sur les filaments de verre.

### EXEMPLE 1

On a fabriqué un fil composite dans l'installation décrite dans la figure 1 avec les conditions suivantes :
- filaments thermoplastiques
   ■ matière thermoplastique : polyéthylène téréphtalate (PET)
   ■ nombre de filaments : 1200 filaments
   ■ masse linéique : 359 tex
   ■ débit du dispositif 8 : 500 m³/h
   ■ vitesse de l'étireur : 1500 m/min; température des rouleaux 12, 13 : 240°C ; taux d'étirage en phase fondue : 1560
   ■ température de l'air dans le dispositif Venturi 16 : 260°C
   ■ vitesse de rotation du tambour 17 : 990 m/min ; refroidissement par pulvérisation d'eau
   ■ taux de frisure : 8 %
      Le taux de frisure est mesuré selon la formule 100 x (L-Lo)/Lo, dans laquelle Lo est la longueur d'un filament frisé et L est la longueur de ce même filament après un étirage suffisant pour le rendre linéaire.
- filaments de verre
   ■ nombre de filaments : 1600
- fil composite
   ■ taux pondéral verre/thermoplastique : 75/25
   ■ masse linéique : 1491 tex
   ■ vitesse linéaire (bobinage) : 1000 m/min.

La bobine 3 est séchée dans une étuve à 118°C pendant 32 heures. Le retrait des filaments thermoplastiques est d'environ 6 %. La géométrie de la bobinie n'est pas modifiée après le séchage.

### EXEMPLE 2

On a fabriqué un fil composite dans l'installation décrite dans la figure 2 avec les conditions suivantes :
- filaments thermoplastiques
   ■ matière thermoplastique : polyamide (PA)
   ■ nombre de filaments : 1200 filaments
   ■ masse linéique : 466 tex
   ■ débit du dispositif 8 : 400 m³/h
   ■ vitesse de l'étireur : 1800 m/min ; température des rouleaux 12, 13 : 180°C taux d'étirage en phase fondue : 3640
   ■ température de l'air dans le dispositif Venturi 16 : 200°C .
   ■ vitesse de rotation du tambour 17 : 1008 m/min ; refroidissement par pulvérisation d'eau
   ■ taux de frisure : 10 %
      Le taux de frisure est mesuré selon la formule 100 x (L-Lo)/Lo, dans laquelle Lo est la longueur d'un filament frisé et L est la longueur de ce même filament après un étirage suffisant pour le rendre linéaire.
- filaments de verre
   ■ nombre de filaments : 1600
- fil composite
   ■ taux pondéral verre/thermoplastique : 70/30
   ■ masse linéique : 1597 tex
   ■ vitesse linéaire (bobinage) : 1008 m/min.

La bobine 3 est séchée dans une étuve à 118°C pendant 32 heures. Le retrait des filaments thermoplastiques est d'environ 7 %. La géométrie de la bobiné n'est pas modifiée après le séchage.

## Revendications

1. Procédé de fabrication d'un fil composite (6) formé par co-mêlage de filaments continus de verre (2, 24) issus d'une filière (1) et de filaments continus de matière organique thermoplastique (5, 10) issus d'une tête de filage (7), les filaments thermoplastiques (5) étant mêlés sous forme d'une nappe (10) à un faisceau (2) ou une nappe (24) de filaments de verre **caractérisé en ce qu'**avant leur pénétration dans le faisceau (2) ou la nappe (24) de filaments de verre, les filaments thermoplastiques (10) sont étirés, chauffés et projetés sur un support en mouvement (17) et **en ce que** la vitesse des filaments thermoplastiques lors de leur projection sur le support (17) est supérieure à la vitesse de défilement du support (17), le support étant un tambour ayant une gorge centrale (18) de largeur légèrement inférieure à celle du tambour et qui est percée de multiples orifices, le tambour ayant en outre un intérieur séparé en deux compartiments (20,21), le premier compartiment (20) étant mis en dépression et le deuxième compartiment (21) étant mis en surpression.

2. Procédé selon la revendication 1, **caractérisé en ce que** le co-mêlage est effectué par projection des filaments thermoplastiques (5, 10) dans les filaments de verre (2, 24) entre un rouleau enducteur (4) et un dispositif(25)de rassemblement des filaments en un fil composite (6).

3. Procédé selon la revendication 2, **caractérisé en ce que** la vitesse des filaments thermoplastiques (5, 10) lors de leur projection est identique à la vitesse d'étirage des filaments de verre (2, 24).

4. Procédé selon la revendication 1, **caractérisé en ce que** les filaments thermoplastiques (5, 10) sont co-mêlés avec les filaments de verre (2, 24) sur le support en mouvement (17).

5. Procédé selon la revendication 4, **caractérisé en ce que** le co-mêlage des filaments se fait sur une génératrice du tambour.

6. Dispositif pour la fabrication d'un fil composite par co-mêlage de filaments continus de verre (2, 24) et de filaments continus de matière organique thermoplastique (5, 10) comprenant d'une part au moins une filière (1) alimentée en verre, dont la face inférieure comporte une multitude d'orifices, cette filière étant associée à un dispositif enducteur (4), et d'autre part au moins une tête de filage (7) alimentée en matière organique thermoplastique fondue, dont la face inférieure est munie d'une multiplicité d'orifices, et des moyens (3, 25), communs à la filière (1) et à la tête de filage (7), permettant l'assemblage et l'étirage du fil composite (6) **caractérisé en ce que** la tête de filage (7) est associée à un étireur (11) du type à rouleaux (12, 13), à un dispositif (16) de projection des filaments thermoplastiques doté de moyens de chauffage, à un support apte à être mis en mouvement du type tambour (17), le support étant un tambour ayant une gorge centrale (18) de largeur légèrement inférieure à celle du tambour et qui est percée de multiples orifices, le tambour ayant en outre un intérieur séparé en deux compartiments (20,21), le premier compartiment (20) étant mis en dépression et le deuxième compartiment (21) étant mis en surpression, et à un moyen (17,23) permettant de mêler les filaments thermoplastiques (5, 10) aux filaments de verre (2, 24).

7. Dispositif selon la revendication 6, **caractérisé en ce que** l'étireur (11) possède au moins deux rouleaux (12, 13) assurant une vitesse croissante aux filaments thermoplastiques (5,10).

8. Dispositif selon la revendication 6, **caractérisé en ce que** le dispositif de projection (16) des filaments thermoplastiques (5,10) est un système Venturi.

## Claims

1. A process for manufacturing composite strand (6) formed by co-mixing of continuous glass filaments (2, 24) coming from a spinneret (1) and of continuous filaments of thermoplastic organic materials (5, 10) coming from a spinning head (7), thermoplastic filaments (5) being mixed in the form of a web (10) with bundle (2) or web (24) of glass filaments, **characterized in that** before their penetration into bundle (2) or web (24) of glass filaments, thermoplastic filaments (10) are drawn, heated and projected onto moving support (17), and **in that** the speed of the thermoplastic filaments, during their projection onto the support (17), is greater than the speed of movement of the support (17), said moving support being a drum having a central groove (18) with a width slightly smaller than the width of said drum, and multiple perforations therein, the inside of the drum being divided into two compartments (20, 21), the first compartment (20) being under low pressure, and the second compartment (21) being under high pressure.

2. A process according to Claim 1, **characterized in that** the co-mixing is brought about by projection of thermoplastic filaments (5, 10) onto glass filaments (2, 24) between a coating roller (4) and a device (25) for gathering the filaments into a composite strand (6).

3. A process according to Claim 2, **characterized in that** the speed of thermoplastic filaments (5, 10) during their projection is identical to the speed of drawing of glass filaments (2, 24).

4. A process according to Claim 1, **characterized in that** thermoplastic filaments (5, 10) are co-mixed with glass filaments (2, 24) on the moving support (17).

5. A process according to Claim 4, **characterized in that** the co-mixing of the filaments takes place on a generating line of the drum.

6. A device for manufacturing a composite strand by co-mixing continuous glass filaments (2, 24) and continuous filaments of thermoplastic organic material (5, 10), which comprises, on one hand, at least one spinneret (1) supplied with glass, whose lower surface has multiple openings, this spinneret being associated with coating device (4), and on the other hand, at least one spinning head (7) supplied with molten thermoplastic organic material, whose lower surface is provided with multiple openings, and some means (3, 25), common to the spinneret (1) and to the spinning head (7), making it possible to assemble and draw composite strand (6), **characterized in that** spinning head (7) is associated with a drawer (11) of the type with rollers (12, 13), with a device (16) for projecting the thermoplastic filaments which is given some heating means, with a moving support (17) of the drum type, said support being a drum having perforations therein, a central groove with a width slightly smaller than the width of said drum, the inside of the drum being divided into two compartments (20, 21), the first compartment (20) being under low pressure, and the second compartment (21) being under high pressure, and with means (17, 23) for making it possible to mix thermoplastic filaments (5, 10) with the glass filaments (2, 24).

7. A device according to Claim 6, **characterized in that** the drawer (11) has at least two rollers (12, 13) providing thermoplastic filaments (5, 10) with an increasing speed.

8. A device according to Claim 6, **characterized in that** the device (16) for projecting the thermoplastic filaments (5, 10) is a Venturi system.

## Patentansprüche

1. Verfahren zur Herstellung eines Verbundfadens (6) der **dadurch** gebildet wird, daß aus einer Spinndüse (1) kommende endlose Glasfilamente (2, 24) und aus einem Spinnkopf (7) kommende endlose Filamente aus thermoplastischem organischem Material (5, 10) miteinander vermengt werden, wobei die thermoplastischen Filamente (5) in Form eines Flächengebildes (10) mit einem Strang (2) oder einem Flächengebilde (24) aus Glasfilamenten vermengt werden, **dadurch gekennzeichnet, daß** die thermoplastischen Filamente (10) vor ihrem Eindringen in den Strang (2) oder das Flächengebilde (24) aus Glasfilamenten gestreckt, erhitzt und auf einen in Bewegung befindlichen Träger (17) geschleudert werden und daß die Geschwindigkeit der thermoplastischen Filamente bei ihrem Aufschleudern auf den Träger (17) höher ist als die Laufgeschwindigkeit des Trägers (17), wobei der Träger eine Trommel ist, die eine mittlere Auskehlung (18) aufweist, deren Breite geringfügig kleiner als die der Trommel ist und die von zahlreichen Öffnungen durchbohrt ist, wobei die Trommel ferner einen in zwei Abteile (20, 21) getrennten Innenraum aufweist, wobei das erste Abteil (20) unter Unterdruck und das zweite Abteil (21) unter Überdruck gesetzt ist.

2. Verfahren nach Anspruch 1, **dadurch gekennzeichnet, daß** das Vermengen durch Schleudern der thermoplastischen Filamente (5, 10) in die Glasfilamente (2, 24) zwischen einer Auftragwalze (4) und einer Vorrichtung (25) zum Zusammenführen der Filamente zu einem Verbundfaden (6) vollzogen wird.

3. Verfahren nach Anspruch 2, **dadurch gekennzeichnet, daß** die Geschwindigkeit der thermoplastischen Filamente (5, 10) bei ihrem Schleudern gleich der Streckgeschwindigkeit der Glasfilamente (2, 24) ist.

4. Verfahren nach Anspruch 1, **dadurch gekennzeichnet, daß** die thermoplastischen Filamente (5, 10) auf dem in Bewegung befindlichen Träger (17) mit den Glasfilamenten (2, 24) vermengt werden.

5. Verfahren nach Anspruch 4, **dadurch gekennzeichnet, daß** das Vermengen der Filamente auf einer Mantellinie der Trommel erfolgt.

6. Vorrichtung für die Herstellung eines Verbundfadens durch Vermengen von endlosen Glasfilamenten (2, 24) und endlosen Filamenten aus thermoplastischem organischem Material (5, 10), umfassend einerseits wenigstens eine Spinndüse (1), der Glas zugeführt wird und deren Unterseite eine Vielzahl von Öffnungen aufweist, wobei diese Spinndüse einer Auftragvorrichtung (4) zugeordnet ist, und andererseits wenigstens einen Spinnkopf (7), dem geschmolzenes thermoplastisches organisches Material zugeführt wird und dessen Unterseite mit einer Vielzahl von Öffnungen versehen ist, sowie Mittel (3, 25), die der Spinndüse (1) und dem Spinnkopf (7) gemein sind und die das Verbinden und das Strecken des Verbundfadens (6) ermöglichen, **dadurch gekennzeichnet, daß** der Spinnkopf (7) einer Streckvorrichtung (11) von der Art mit Rollen (12, 13), einer Vorrichtung (16) zum Schleudern der thermoplastischen Filamente, die mit Heizmitteln ausgestattet ist, einem Träger vom Typ Trommel (17), welcher geeignet ist, in Bewegung versetzt zu werden, wobei der Träger eine Trommel ist, die eine mittlere Auskehlung (18) aufweist, deren Breite geringfügig kleiner als die der Trommel ist und die von zahlreichen Öffnungen durchbohrt ist, wobei die Trommel ferner einen in zwei Abteile (20, 21) getrennten Innenraum aufweist, wobei das erste Abteil (20) unter Unterdruck und das zweite Abteil (21) unter Überdruck gesetzt ist, sowie einem Mittel (17, 23), das ermöglicht, die thermoplastischen Filamente (5, 10) mit den Glasfilamenten (2, 24) zu vermengen, zugeordnet ist.

7. Vorrichtung nach Anspruch 6, **dadurch gekennzeichnet, daß** die Streckvorrichtung (11) wenigstens zwei Rollen (12, 13) aufweist, die eine zunehmende Geschwindigkeit der thermoplastischen Filamente (5, 10) gewährleisten.

8. Vorrichtung nach Anspruch 6, **dadurch gekennzeichnet, daß** die Vorrichtung zum Schleudern (16) der thermoplastischen Filamente (5, 10) ein Venturi-System ist.
